# EUROPEAN PATENT APPLICATION

(11) **EP 4 838 076 A1**
(43) Date of publication of application: **11.11.2026**
(21) Application number: 24924557.2
(22) Date of filing: 29.11.2024
(51) Int. Cl.: F02D 23/00, F02B 37/18, F02D 41/04

(54) **CONTROL DEVICE, POWER GENERATION SYSTEM, AND CONTROL METHOD**

(30) Priority: 16.02.2024 JP 2024022143
(71) Applicant: MITSUBISHI HEAVY INDUSTRIES ENGINE & TURBOCHARGER, LTD., Sagamihara-shi, Kanagawa 252-5293 (JP)
(72) Inventor: SUZUKI, Hajime, Sagamihara-shi, Kanagawa 252-5293 (JP); KOAKUTSU, Takahiro, Sagamihara-shi, Kanagawa 252-5293 (JP)
(74) Representative: Studio Torta S.p.A.
(86) International application number: PCT/JP2024/042373
(87) International publication number: WO 2025/173354

(57) **Abstract**

Provided is control of a supercharger in response to a decrease in an engine rotation speed. The present invention provides control of a supercharger in response to a reduction in engine RPM. This control device is for controlling an air supply/release valve which is provided in an air supply/release pipe that is branched off from the middle of an air supply pipe connecting a supercharger and an engine and an exhaust bypass valve which is provided in an exhaust bypass pipe for discharging exhaust gas discharged by the engine while bypassing the supercharger. The control device comprises: a means for controlling the exhaust bypass valve on the basis of a target air supply pressure of air supplied from the supercharger to the engine or a mixed gas in which a fuel and the air are mixed; and a means for opening the air supply/release valve when a reduction in RPM of the engine occurs.

## Description

### Technical Field

The present disclosure relates to a control device, a power generation system, and a control method. The present disclosure claims priority based on Japanese Patent Application No. 2024-022143 filed in Japan on February 16, 2024, the contents of which are incorporated herein by reference.

### Background Art

In a supercharged engine, the turbocharger supplies the compressed air to a combustion chamber. The air that is combusted together with the fuel in the combustion chamber is supplied to the turbocharger through an exhaust pipe and is then discharged to the outside of the system. In a high-output diesel engine or a premixed gas engine, an air supply release pipe for releasing a part of the air supplied from the turbocharger to the engine to the outside of the system or an exhaust bypass pipe for bypassing a flow path of the exhaust gas from the engine to the turbocharger is provided, and the amount of air flowing through these pipes is controlled, thereby realizing high-efficiency operation. For example, PTL 1 discloses control of achieving an air supply pressure corresponding to an operation condition of the engine by adjusting the amount of air flowing through the air supply release pipe (air supply bypass passage) or the exhaust bypass pipe.

With an increase in a renewable energy power source, a power generation facility connected to a power grid is required to maintain the power grid. When a voltage or a frequency of the power grid fluctuates, various influences occur in the power generation facility connected to the power grid. For example, when the grid frequency decreases, a rotation speed of an engine generator connected to the power grid decreases. When the rotation speed of the engine generator decreases, an operating line of the turbocharger that supplies compressed air to the engine generator changes to a low flow rate side, and a probability of occurrence of surging increases. In a case of a premixed gas engine with a turbocharger upstream intake, a volume from a mixer that mixes fuel and air to a combustion chamber is large, and when a load rejection or the like occurs, there is a possibility that the premixed gas present in a piping or the like from the mixer to the combustion chamber is supplied to the combustion chamber, and an overshoot occurs. As described above, when the rotation speed of the engine decreases due to a decrease in the grid frequency, a load rejection, or the like, various problems may occur on the turbocharger side.

### Citation List

### Patent Literature

[PTL 1] Japanese Unexamined Patent Application Publication No. 2005-240585

### Summary of Invention

### Technical Problem

It is necessary to control a turbocharger in response to a decrease in an engine rotation speed.

The present disclosure provides a control device, a power generation system, and a control method capable of solving the above-described problem.

### Solution to Problem

According to an aspect of the present disclosure, there is provided a control device for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control device including means for controlling an opening degree of the exhaust bypass valve based on a target air supply pressure of air or a mixed gas in which fuel and the air are mixed, the air or the mixed gas being supplied from the turbocharger to the engine; and means for opening the air supply release valve in a case where a decrease in a rotation speed of the engine occurs.

According to an aspect of the present disclosure, there is provided a power generation system including an engine, a generator driven by the engine, a turbocharger that supplies compressed air to the engine, an air supply pipe connecting the turbocharger and the engine, an air supply release pipe branched from the air supply pipe, an air supply release valve provided in the air supply release pipe, an exhaust bypass pipe that bypasses the turbocharger and through which exhaust gas discharged from the engine is discharged, an exhaust bypass valve provided in the exhaust bypass pipe, and the control device according to the above description.

According to an aspect of the present disclosure, there is provided a control method for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control method including controlling an opening degree of the exhaust bypass valve based on a target air supply pressure of air or a mixed gas in which fuel and the air are mixed, the air or the mixed gas being supplied from the turbocharger to the engine, and opening the air supply release valve in a case where a decrease in a rotation speed of the engine occurs.

### Advantageous Effects of Invention

According to the control device, the power generation system, and the control method, it is possible to suppress the occurrence of surging, overshoot, or the like due to a decrease in the engine rotation speed that occurs when the grid frequency decreases or when a load is rejected.

### Brief Description of Drawings

FIG. 1 is a schematic diagram showing a configuration of a power generation system according to a first embodiment.
FIG. 2 is an explanatory diagram of a situation in which a decrease in the rotation speed of the engine occurs, relating to the first embodiment.
FIG. 3 is a diagram showing characteristics of a turbocharger according to the first embodiment.
FIG. 4 is a first diagram showing an example of control according to the first embodiment.
FIG. 5 is a second diagram showing an example of control according to the first embodiment.
FIG. 6 is a third diagram showing an example of control according to the first embodiment.
FIG. 7 is a flowchart showing an example of control according to the first embodiment.
FIG. 8 is a schematic diagram showing a configuration of a power generation system according to a second embodiment.
FIG. 9 is a diagram showing an example of control according to the second embodiment.
FIG. 10 is a flowchart showing an example of control according to the second embodiment.
FIG. 11 is a schematic block diagram showing a configuration of a computer according to each embodiment.

### Description of Embodiments

### <First Embodiment>

Hereinafter, a power generation system 1 and control thereof according to a first embodiment will be described with reference to the drawings.

### (Configuration of Power Generation System)

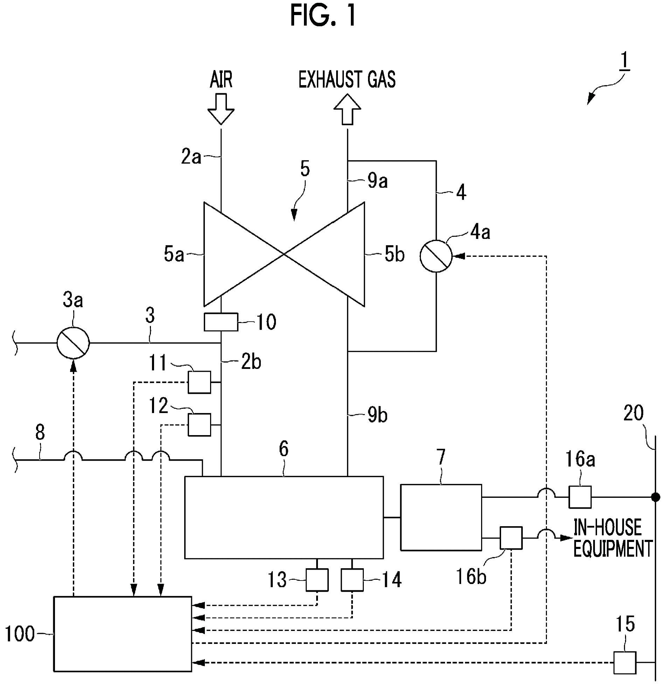

As shown in FIG. 1, the power generation system 1 according to the first embodiment includes an air pipe 2a, an air supply pipe 2b, an air supply release pipe 3, an exhaust bypass pipe 4, a turbocharger 5, an engine 6, a generator 7, a fuel supply pipe 8, an exhaust outlet pipe 9a, an exhaust pipe 9b, and a cooler 10. The turbocharger 5 includes a compressor 5a and an exhaust turbine 5b. Air is supplied to the compressor 5a through the air pipe 2a. The air supply pipe 2b connects the compressor 5a and the engine 6, and the air compressed by the compressor 5a is cooled by the cooler 10 and supplied to the engine 6 through the air supply pipe 2b. The fuel is supplied to the engine 6 through the fuel supply pipe 8. The air supply pipe 2b is provided with a pressure sensor 11 that measures an air supply pressure and a temperature sensor 12 that measures an air supply temperature, and values measured by these sensors are transmitted to a control device 100. The air supply release pipe 3 that branches the flow of air to the engine 6 is connected to the air supply pipe 2b, and a part of the air in the air supply pipe 2b can be discharged to the outside of the system through the air supply release pipe 3. The air supply release pipe 3 is provided with an air supply release valve 3a that adjusts the discharge amount of air. The opening degree of the air supply release valve 3a is controlled by the control device 100. The exhaust pipe 9b connects the engine 6 and the exhaust turbine 5b. The exhaust outlet pipe 9a is a flow path for discharging exhaust gas from an exhaust gas outlet of the exhaust turbine 5b. The exhaust bypass pipe 4 is branched from the exhaust pipe 9b, bypasses the exhaust turbine 5b, and is connected to the exhaust outlet pipe 9a. The exhaust bypass pipe 4 is provided with an exhaust bypass valve 4a, and the opening degree of the exhaust bypass valve 4a is controlled by the control device 100. The engine 6 is provided with a rotation speed sensor 13 that measures the rotation speed of the engine 6 and an output sensor 14 that measures the output of the engine 6. The values measured by these sensors are transmitted to the control device 100. The generator 7 is driven by the engine 6 to generate power. The generator 7 is connected to a power grid 20, and supplies the generated power to the power grid 20. A circuit breaker 16a is provided on a line connecting the generator 7 and the power grid 20, and the connection and disconnection between the generator 7 and the power grid 20 are switched by turning on (connecting) or off (disconnecting) the circuit breaker 16a. In a case where the power generation system 1 is operated in an isolated operation without being connected to the power grid 20, a circuit breaker 16b is provided on a line connecting the generator 7 and in-house equipment (not shown) in order to supply the generated power to the in-house equipment, and the connection and disconnection between the generator 7 and the in-house equipment are switched by turning on (connecting) or off (disconnecting) the circuit breaker 16b. Circuit breaker signals indicating whether the circuit breakers 16a and 16b are in a connected state or a disconnected state are respectively transmitted to the control device 100. A frequency sensor 15 measures a grid frequency. The frequency of the power grid 20 measured by the frequency sensor 15 is transmitted to the control device 100. The control device 100 is constituted by a computer, acquires measured values from the sensors 11 to 15 and circuit breaker signals from the circuit breakers 16a and 16b, and controls the air supply release valve 3a and the exhaust bypass valve 4a. For example, the control device 100 calculates a target air supply pressure for efficiently operating the engine 6 based on the air supply pressure, the rotation speed, and the output, and controls the opening degree of the exhaust bypass valve 4a based on the target air supply pressure to control the amount of air supplied to the engine 6 to a target value. For example, the control device 100 temporarily opens the air supply release valve 3a to increase a surge margin, thereby avoiding surging, when a decrease in the frequency of the power grid 20 (a decrease in the rotation speed of the engine 6), a load rejection, or the like occurs.

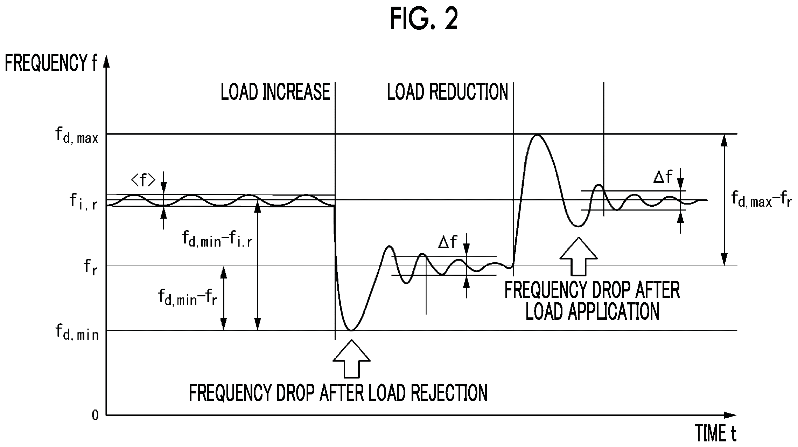

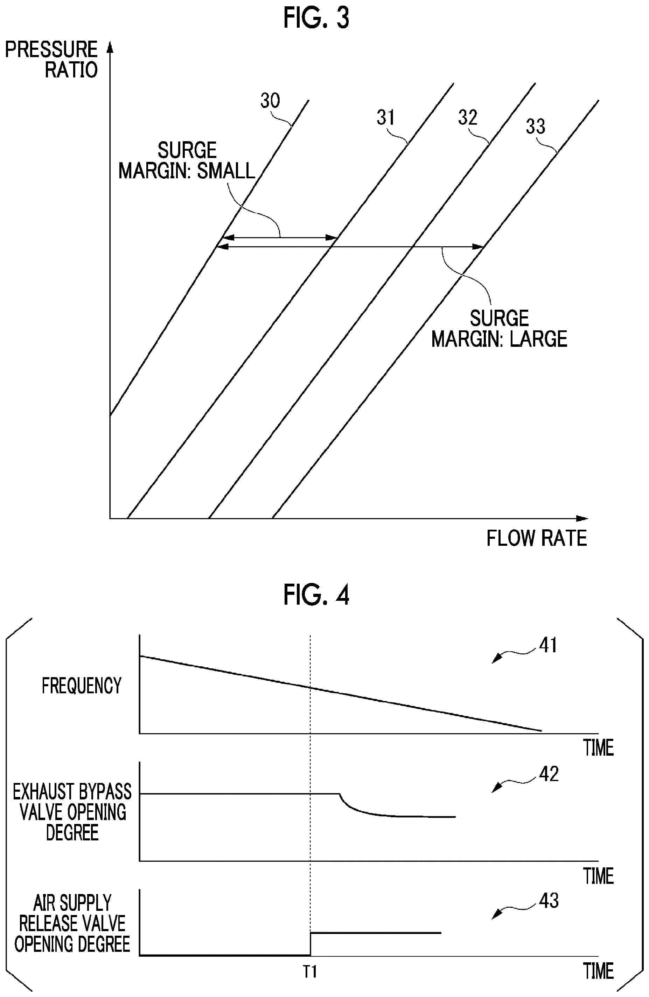

In the power generation system 1, when the grid frequency decreases, the rotation speed of the engine 6 decreases. As shown in FIG. 2, the frequency f (the rotation speed of the engine 6) decreases even after a load application or after a load rejection. When the rotation speed of the engine 6 decreases, the operating line of the turbocharger 5 changes to a low flow rate side, the surge margin of the turbocharger 5 decreases, and the probability of occurrence of surging increases. FIG. 3 schematically shows a characteristic curve of the turbocharger 5. A vertical axis of a graph in FIG. 3 is a pressure ratio, and a horizontal axis is a flow rate of air supplied by the turbocharger 5. A line 30 represents a boundary between an operation region (left side of 30) in which surging occurs in the turbocharger 5 and an operation region (right side of 30) in which surging does not occur, and a line 32 indicates an operating line of the turbocharger 5 during rated operation. When the rotation speed of the engine 6 decreases, the operating line of the turbocharger 5 changes from the line 32 to a line 31. Then, the distance to the line 30 becomes shorter (that is, the surge margin decreases), and the probability of occurrence of surging increases. In particular, in the premixed gas engine, when surging occurs, the mixed gas flows back to the air supply chamber due to blowback, and the mixed gas and fuel gas blown back in the next cycle are supplied to the combustion chamber, an excess air ratio decreases, and the mean effective pressure (Pmi) increases. Therefore, abnormal combustion such as pre-ignition or knocking may occur, and the combustion chamber may be damaged. In general, securing the surge margin of the turbocharger 5 is dealt with by throttling a diffuser. However, when the surge margin of the turbocharger 5 is to be secured by mounting the diffuser manufactured in this way, the overall efficiency of the turbocharger 5 decreases, including in a state in which a frequency decrease does not occur, such as during the rated operation. The decrease in the efficiency of the turbocharger 5 leads to a decrease in the thermal efficiency of the engine 6. Therefore, in the present embodiment, in a state in which a decrease in the rotation speed of the engine occurs, the air supply release valve 3a is temporarily opened to secure the surge margin by discharging the air to the outside of the system through the air supply release pipe 3, and the air supply release valve 3a is closed in other cases to operate the turbocharger 5 with high efficiency. A line 33 in FIG. 3 is an operating line of the turbocharger 5 in a case where the air supply release valve 3a is opened. As shown in the drawing, the surge margin can be increased by opening the air supply release valve 3a. Although the surge margin can be increased by opening the air supply release valve 3a, the efficiency of the turbocharger 5 decreases. Therefore, the air supply release valve 3a is closed in a state in which a decrease in the rotation speed of the engine does not occur, and a decrease in the efficiency of the turbocharger 5 is prevented. On the other hand, the turbocharger efficiency and the surge margin are generally constant regardless of the opening degree of the exhaust bypass valve 4a. By opening the exhaust bypass valve 4a, the thermal efficiency of the engine and the overall efficiency of the plant can be improved. For example, by opening the exhaust bypass valve 4a, the temperature of the exhaust gas discharged from the exhaust outlet pipe 9a can be increased, which is effective from the viewpoint of waste heat recovery.

### (Control during Frequency Decrease)

Next, the control of the air supply release valve 3a and the exhaust bypass valve 4a in a case where the frequency (the rotation speed of the engine 6) of the power grid 20 decreases will be described with reference to FIG. 4. A graph 41 in FIG. 4 shows a transition of the grid frequency. A graph 42 shows a transition of the opening degree of the exhaust bypass valve 4a. A graph 43 shows a transition of the opening degree of the air supply release valve 3a. The same position on the horizontal axis of the graphs 41 to 43 indicates the same time. The control device 100 performs control of the opening degree of the exhaust bypass valve 4a such that the pressure measured by the pressure sensor 11 is always the target air supply pressure calculated from the map of the brake mean effective pressure (Pme) and the air supply pressure, regardless of the grid frequency. For example, the control device 100 calculates Pme by substituting the rotation speed measured by the rotation speed sensor 13 and the output measured by the output sensor 14 into the formula of Pme, and calculates the target air supply pressure corresponding to Pme using a map, a table, a function, or the like that defines the relationship between Pme and the target air supply pressure. Then, the control device 100 calculates the opening degree of the exhaust bypass valve 4a corresponding to the target air supply pressure with reference to a correspondence table or the like between the target air supply pressure and the opening degree of the exhaust bypass valve 4a, and controls the exhaust bypass valve 4a. The graph 42 shows a transition of the opening degree of the exhaust bypass valve 4a by such control.

The control device 100 monitors the frequency of the power grid 20 measured by the frequency sensor 15, and when the frequency decreases to a predetermined threshold value or when a decrease rate of the frequency is detected to be equal to or higher than a predetermined threshold value, the control device 100 performs control to open the air supply release valve 3a in order to suppress surging. Three types of examples will be described as a control method of the air supply release valve 3a.
(1) Opening at a constant opening degree When the control device 100 detects a decrease in the grid frequency at time T1, the control device 100 opens the air supply release valve 3a at a constant opening degree. The graph 43 shows this control.
(2) Opening in stages according to rotation speed When the control device 100 detects a decrease in the grid frequency at time T1, the control device 100 opens the air supply release valve 3a in stages according to the rotation speed measured by the rotation speed sensor 13. For example, the control device 100 holds a table (the opening degree is larger as the rotation speed decreases) in which the rotation speed (or the range of the rotation speed) of the engine 6 and the opening degree of the air supply release valve 3a are associated with each other, and reads the opening degree corresponding to the rotation speed measured by the rotation speed sensor 13 with reference to the table to control the air supply release valve 3a.
(3) Opening in stages according to rotation speed and output When the control device 100 detects a decrease in the grid frequency at time T1, the control device 100 opens the air supply release valve 3a in stages according to the rotation speed measured by the rotation speed sensor 13 and the output measured by the output sensor 14. For example, the control device 100 holds a table in which the rotation speed (or the range of the rotation speed) of the engine 6, the output (or the range of the output) of the engine 6, and the opening degree of the air supply release valve 3a are associated with each other, and reads the opening degree corresponding to the values measured by the rotation speed sensor 13 and the output sensor 14 with reference to the table to control the air supply release valve 3a.

When the grid frequency decreases due to a fluctuation or the like in the renewable energy power source, the surge margin is secured by any of the controls (1) to (3). On the other hand, since the amount of air supplied to the engine 6 side decreases, the opening degree of the exhaust bypass valve 4a is decreased to secure the air supply pressure. The control device 100 may be configured to monitor the rotation speed measured by the rotation speed sensor 13 instead of the frequency of the power grid 20 measured by the frequency sensor 15, and to perform the control of opening the air supply release valve 3a when the rotation speed decreases to a predetermined threshold value or when a decrease rate of the rotation speed is detected to be equal to or higher than a predetermined threshold value. The control device 100 may close the air supply release valve 3a, for example, after the decrease in the grid frequency stops.

### (Control at Time of Load Application)

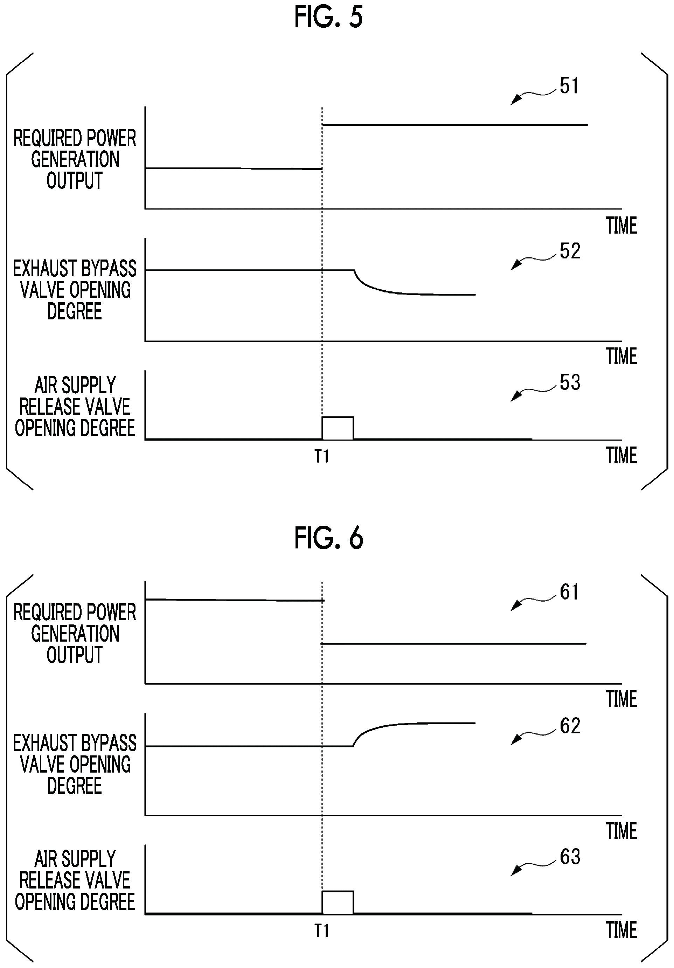

Next, control in a case where a load is applied during isolated operation disconnected from the power grid 20 and during a transition from grid-connected operation to isolated operation will be described with reference to FIG. 5. A graph 51 in FIG. 5 shows a transition of a required power generation amount. A graph 52 shows a transition of an opening degree of the exhaust bypass valve 4a. A graph 53 shows a transition of an opening degree of the air supply release valve 3a. The same position on the horizontal axis of the graphs 51 to 53 indicates the same time. The control device 100 performs control of the opening degree of the exhaust bypass valve 4a such that the pressure measured by the pressure sensor 11 is always the target air supply pressure calculated from the map of the brake mean effective pressure (Pme) and the air supply pressure, throughout before and after the load application. This control is as described in FIG. 4.

As described with reference to FIG. 2, a decrease in the frequency occurs and the surge margin decreases even at the time of load application. When the control device 100 acquires a signal indicating that the circuit breaker 16b is turned on, which is emitted by the circuit breaker 16b, the control device 100 performs control to open the air supply release valve 3a in order to suppress surging. Two types of examples will be described as a control method of the air supply release valve 3a.
(1) Opening at a constant opening degree When the control device 100 acquires a circuit breaker signal (on) at time T1, the control device 100 opens the air supply release valve 3a at a constant opening degree for a predetermined time, and closes the air supply release valve 3a after the predetermined time has elapsed. The graph 53 shows this control.
(2) Opening according to output When the control device 100 acquires a circuit breaker signal (on) at time T1, the control device 100 opens the air supply release valve 3a according to the output measured by the output sensor 14. For example, the control device 100 holds a table (the opening degree is larger as the output decreases) in which the output of the engine 6 and the opening degree of the air supply release valve 3a are associated with each other, and reads the opening degree corresponding to the output measured by the output sensor 14 with reference to the table to open the air supply release valve 3a. For example, the control device 100 may close the air supply release valve 3a after opening the air supply release valve 3a for a certain period of time, or may close the air supply release valve 3a after the output measured by the output sensor 14 reaches a predetermined value. As described above, when the circuit breaker signal for load application is detected during the isolated operation, the air supply release valve 3a is temporarily opened to ensure the surge margin. On the other hand, since the supply amount of air to the engine 6 side decreases, the opening degree of the exhaust bypass valve is decreased to ensure the air supply pressure.

### (Control at Time of Load Reduction)

Next, control in a case where a large load reduction occurs during isolated operation disconnected from the power grid 20 or during a transition from grid-connected operation to isolated operation will be described with reference to FIG. 6. A graph 61 in FIG. 6 shows a transition of a required power generation amount. A graph 62 shows a transition of the opening degree of the exhaust bypass valve 4a. A graph 63 shows a transition of the opening degree of the air supply release valve 3a. The same position on the horizontal axis of the graphs 61 to 63 indicates the same time. The control device 100 performs control of the opening degree of the exhaust bypass valve 4a such that the pressure measured by the pressure sensor 11 is always the target air supply pressure calculated from the map of the brake mean effective pressure (Pme) and the air supply pressure, throughout before and after the load rejection. This control is as described with reference to FIG. 4.

As described with reference to FIG. 2, a decrease in the frequency occurs even during the load rejection, and the surge margin decreases. When the control device 100 acquires, from the circuit breaker 16a, a signal indicating that the circuit breaker 16a is turned off, the control device 100 performs control to open the air supply release valve 3a in order to suppress surging. Two types of examples will be described as a control method of the air supply release valve 3a. These controls are the same as those described with reference to FIG. 5.
(1) Opening at a constant opening degree When the control device 100 acquires a circuit breaker signal (off) at time T1, the control device 100 opens the air supply release valve 3a at a constant opening degree for a predetermined time, and closes the air supply release valve 3a after the predetermined time has elapsed. The graph 63 shows this control.
(2) Opening according to output When the control device 100 acquires a circuit breaker signal (off) at time T1, the control device 100 opens the air supply release valve 3a according to the output measured by the output sensor 14.

For example, the control device 100 may close the air supply release valve 3a after opening the air supply release valve 3a for a certain period of time, or may close the air supply release valve 3a after the output measured by the output sensor 14 reaches a predetermined value. As described above, when the circuit breaker signal for load rejection is detected, the air supply release valve 3a is temporarily opened to increase the surge margin and avoid surging.

### (Operation)

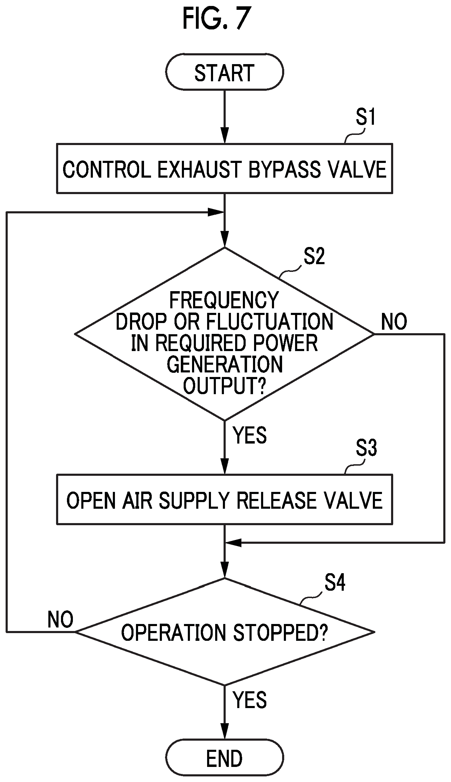

Next, the control of the air supply release valve 3a and the exhaust bypass valve 4a of the present embodiment will be described with reference to FIG. 7.

FIG. 7 is a flowchart showing an example of control according to the first embodiment.

The control device 100 controls the exhaust bypass valve 4a such that the air supply pressure becomes the target air supply pressure calculated from the map of Pme and the air supply pressure (step S1). This control is continuously performed during the operation of the turbocharger 5. Next, the control device 100 determines whether there is a decrease in the grid frequency or a fluctuation in the required power generation output (step S2). For example, the control device 100 determines the presence or absence of a frequency decrease or a fluctuation in the required power generation output based on the measured value of the frequency sensor 15 or the circuit breaker signal emitted by the circuit breakers 16a and 16b. In a case where there is no frequency decrease or the like (step S2; No), the process proceeds to step S4. In a case where there is a frequency decrease or the like (step S2; Yes), the control device 100 performs control of temporarily opening the air supply release valve 3a (step S3). For example, the control device 100 may (1) open the air supply release valve 3a at a constant opening degree, (2) open the air supply release valve 3a at an opening degree corresponding to the rotation speed of the engine 6, (3) open the air supply release valve 3a at an opening degree corresponding to the output of the engine 6, or (4) open the air supply release valve 3a at an opening degree corresponding to the rotation speed and the output of the engine 6. The control device 100 may close the air supply release valve 3a after a certain period of time has elapsed since the air supply release valve 3a is opened, or may close the air supply release valve 3a after the decrease in the grid frequency or the fluctuation in the required power generation output is stabilized. Even during the opening and closing control of the air supply release valve 3a, the control device 100 continues the control of the exhaust bypass valve 4a in step S1. The control device 100 repeats the processing of step S2 and subsequent steps until the operation of the turbocharger 5 is stopped (step S4; No). The control of the exhaust bypass valve 4a in step S1 is continuously performed during this period. In a case where the operation of the turbocharger 5 is stopped (step S4; Yes), the processing of FIG. 7 is ended.

### (Effects)

According to the first embodiment, in a case where the rotation speed of the engine 6 decreases due to a fluctuation in the required power generation output, such as a decrease in the grid frequency or a sudden change in the load, by opening the air supply release valve 3a to discharge the air supplied to the engine 6, the air flow rate supplied to the turbocharger 5 is maintained (or increased). As a result, it is possible to prevent the operating line of the turbocharger 5 from changing to a low flow rate side and the surge margin of the turbocharger 5 from decreasing, and to suppress the occurrence of surging. By opening the air supply release valve 3a only in a situation in which the decrease in the rotation speed of the engine 6 is predicted or estimated, the turbocharger 5 can be operated without decreasing the operation efficiency of the turbocharger 5 in other cases. In order to prepare for a decrease in the grid frequency, which hardly occurs, it is not necessary to perform hardware modification, such as mounting a diffuser that has been subjected to surging countermeasures, and it is possible to respond to a decrease in the rotation speed of the engine only by controlling the valve, so that the control device can be easily introduced.

### <Second Embodiment>

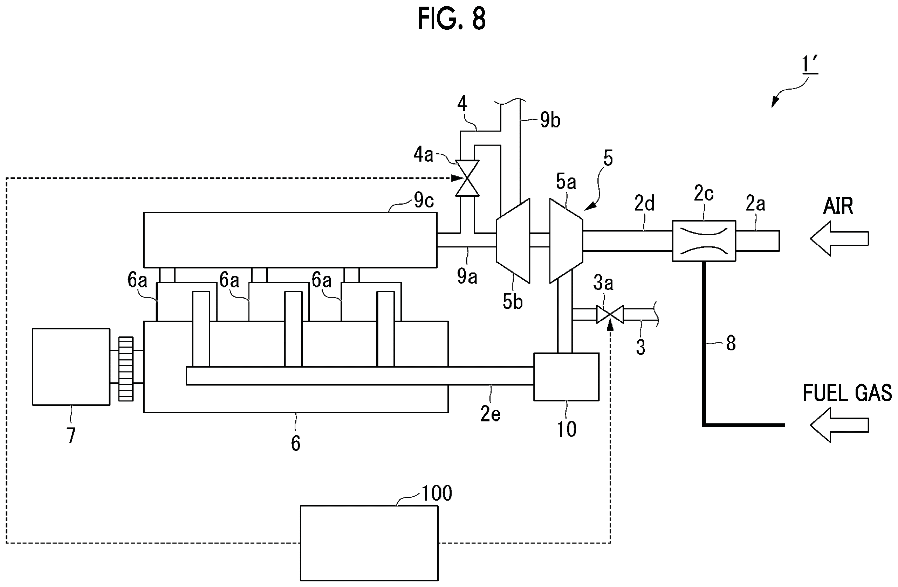

Hereinafter, a power generation system 1' and control thereof according to the second embodiment will be described with reference to the drawings. FIG. 8 is a schematic diagram showing a configuration of a power generation system according to the second embodiment. FIG. 8 illustrates a schematic diagram of the power generation system 1' including a premixed gas engine with a turbocharger upstream intake. Unlike the gas engine illustrated in FIG. 1, a mixer 2c is provided in a stage before the compressor 5a, the air pipe 2a and the fuel supply pipe 8 are connected to the mixer 2c, and the fuel gas and the air are mixed in the mixer 2c. The mixed gas (referred to as a mixed gas) is supplied to the compressor 5a of the turbocharger 5 through the air supply pipe 2d. The mixed gas compressed by the compressor 5a is cooled by the cooler 10 and supplied to the combustion chamber 6a of the engine 6 through the air supply pipe 2e. The exhaust gas combusted in the engine 6 is collected in the exhaust manifold 9c and supplied to the exhaust turbine 5b through the exhaust pipe 9b. Other configurations are the same as those described in FIG. 1. In FIG. 8, the sensors are not shown. In the case of the premixed gas engine with the turbocharger upstream intake illustrated in FIG. 8, the volume of the piping or the like from the mixer 2c to the combustion chamber 6a is large, and the space is filled with the mixed gas during the operation. In this state, when the load rejection occurs, the mixed gas present between the mixer 2c and the combustion chamber 6a is supplied to the combustion chamber and combusted, and the output of the engine 6 may overshoot. Therefore, in the second embodiment, the air supply release valve 3a is opened at the time of load rejection to release the mixed gas, thereby suppressing the overshoot.

### (Control at Time of Load Rejection)

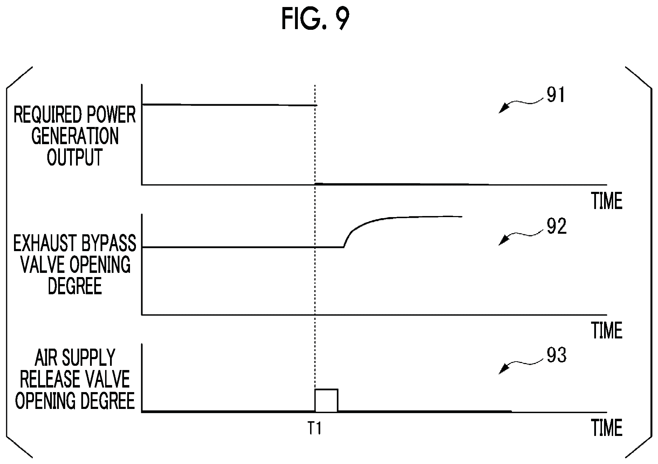

Control in a case where the transition to isolated operation is performed by disconnecting from the power grid 20 (load rejection) will be described with reference to FIG. 9. A graph 91 in FIG. 9 shows a transition of a required power generation amount. A graph 92 shows a transition of an opening degree of the exhaust bypass valve 4a. A graph 93 shows a transition of an opening degree of the air supply release valve 3a. The same position on the horizontal axis of the graphs 91 to 93 indicates the same time. When the control device 100' acquires a circuit breaker signal indicating that the circuit breaker 16a or the circuit breaker 16b is turned off, the control device 100' performs control to suppress overshoot. When the control device 100' acquires a circuit breaker signal (off) at time T1, the control device 100' performs control to fully open the exhaust bypass valve 4a after a predetermined time has elapsed (graph 92). The control device 100' performs control to open the air supply release valve 3a. Two types of examples will be described as a control method of the air supply release valve 3a. These controls are the same as those described with reference to FIG. 5.
(1) Opening at a constant opening degree When the control device 100' acquires a circuit breaker signal (off) at time T1, the control device 100' opens the air supply release valve 3a at a constant opening degree for a predetermined time, and closes the air supply release valve 3a after the predetermined time has elapsed. The graph 93 shows this control.
(2) Opening according to output When the control device 100' acquires a circuit breaker signal (off) at time T1, the control device 100' opens the air supply release valve 3a according to the output measured by the output sensor 14.

For example, the control device 100' may close the air supply release valve 3a after opening the air supply release valve 3a for a certain period of time, may close the air supply release valve 3a after the output measured by the output sensor 14 reaches a predetermined value, or may close the air supply release valve 3a after the exhaust bypass valve 4a is fully opened. This control can be applied to load rejection or emergency shutdown. After the control described in FIG. 9 is performed, the operation may be continued and connection to the power grid 20 may be established again.

### (Operation)

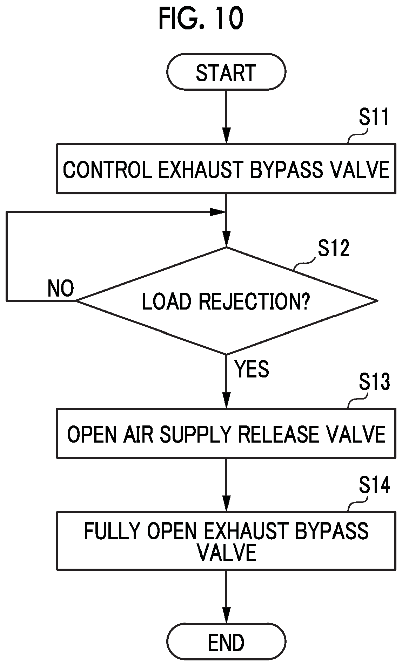

Next, the control of the air supply release valve 3a and the exhaust bypass valve 4a of the present embodiment will be described with reference to FIG. 10.

FIG. 10 is a flowchart showing an example of control according to the second embodiment.

The control device 100' controls the exhaust bypass valve 4a such that the air supply pressure of the mixed gas becomes the target air supply pressure calculated from the map of Pme and the air supply pressure (step S11). This control is continuously performed during the operation of the turbocharger 5. Next, the control device 100' determines whether the load rejection has occurred (step S12). For example, the control device 100' determines whether or not the load rejection has occurred based on the circuit breaker signal emitted by the circuit breaker 16a. In a case where there is no load rejection (step S12; No), the process of step S11 is continued. In a case where there is load rejection (step S12; Yes), the control device 100' performs control to open the air supply release valve 3a (step S13). For example, the control device 100' may (1) open the air supply release valve 3a at a certain valve opening degree, or (2) open the air supply release valve 3a at an opening degree corresponding to the output of the engine 6. When a certain period of time has elapsed since the load rejection is detected, the control device 100' fully opens the exhaust bypass valve 4a (step S14).

### (Effects)

According to the second embodiment, it is possible to suppress overshoot of the output of the engine 6 due to a fluctuation in required power generation output, such as a load rejection.

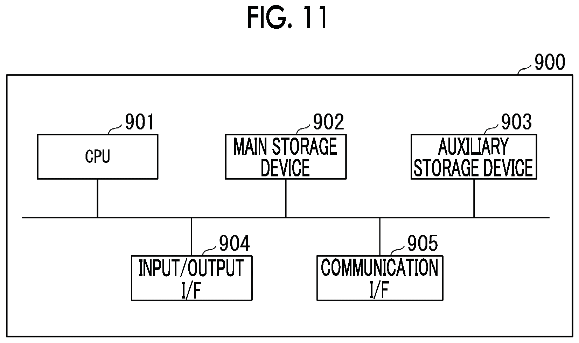

FIG. 11 is a schematic block diagram showing a configuration of a computer according to the present embodiment.

A computer 900 includes a CPU 901, a main storage device 902, an auxiliary storage device 903, an input/output interface 904, and a communication interface 905. The control devices 100 and 100' described above are mounted on the computer 900. Each of the functions mentioned above is stored in the auxiliary storage device 903 in the form of a program. The CPU 901 reads the program from the auxiliary storage device 903, loads the program into the main storage device 902, and executes the above-described processing in accordance with the program. The CPU 901 secures a storage area in the main storage device 902 in accordance with the program. The CPU 901 secures a storage area for storing data being processed in the auxiliary storage device 903 in accordance with the program.

In other embodiments, the computer 900 may include a custom large scale integrated circuit (LSI) such as a programmable logic device (PLD) in addition to or instead of the above configuration. Examples of the PLD include a programmable array logic (PAL), a generic array logic (GAL), a complex programmable logic device (CPLD), and a field programmable gate array (FPGA). In this case, some or all of the functions realized by the processor 901 may be realized by the integrated circuit. Such an integrated circuit is also included in an example of the processor.

A program for implementing all or a part of the functions of the control devices 100 and 100' may be recorded on a computer-readable recording medium, and the processing by each functional unit may be performed by a computer system reading and executing the program recorded on the recording medium. The term "computer system" as used herein includes an OS and hardware such as peripheral devices. The term "computer system" also includes a homepage providing environment (or a display environment) in a case where a WWW system is used. The term "computer-readable recording medium" refers to portable media such as a CD, a DVD, a USB, or the like, or a storage device such as a hard disk built into the computer system. In a case where the program is distributed to the computer 900 via a communication line, the computer 900 that receives the distribution may load the program into the main storage device 902 and execute the above-described processing. The above-described program may be for implementing only a part of the above-mentioned functions, or may also be capable of implementing the above-mentioned functions in combination with a program already recorded in the computer system.

As described above, several embodiments according to the present disclosure have been described, but all of these embodiments are presented by way of example and are not intended to limit the scope of the invention. These embodiments can be implemented in various other forms, and various omissions, replacements, and changes can be made within a range not departing from the gist of the invention. These embodiments and modifications thereof are included in the scope and gist of the invention, and similarly included in the invention described in the claims and an equivalent scope thereof.

### <Supplementary Notes>

The control device, the power generation system, and the control method described in each embodiment are understood as follows, for example.
(1) A control device for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control device including means for controlling an opening degree of the exhaust bypass valve based on a target air supply pressure of air or a mixed gas in which fuel and the air are mixed, the air or the mixed gas being supplied from the turbocharger to the engine, and means for opening the air supply release valve in a case where a decrease in a rotation speed of the engine occurs.
   Accordingly, it is possible to avoid surging or overshoot of the output that occurs when the engine rotation speed decreases.
(2) The control device according to a second aspect is the control device according to (1), in which the means for controlling the exhaust bypass valve calculates, based on a brake mean effective pressure calculated from the rotation speed of the engine and an output of the engine, and information defining a relationship between the brake mean effective pressure and an air supply pressure from the turbocharger to the engine, the air supply pressure corresponding to the brake mean effective pressure of the engine, and controls the exhaust bypass valve such that the calculated air supply pressure is achieved.
   Accordingly, the engine can be efficiently operated.
(3) The control device according to a third aspect is the control device according to (1) and (2), in which the means for opening the air supply release valve opens the air supply release valve at a constant opening degree in a case where a decrease in the rotation speed of the engine occurs.
   Accordingly, it is possible to avoid surging or overshoot of the output that occurs when the engine rotation speed decreases.
(4) The control device according to a fourth aspect is the control device according to (1) and (2), in which, in a case where a decrease in the rotation speed of the engine occurs, the means for opening the air supply release valve opens the air supply release valve at an opening degree corresponding to the rotation speed of the engine and/or an output of the engine.
   Accordingly, it is possible to avoid surging or overshoot of the output that occurs when the engine rotation speed decreases.
(5) The control device according to a fifth aspect is the control device according to (1) to (4), in which the case where a decrease in the rotation speed of the engine occurs is any one of a case where a frequency of an electric power grid to which a generator driven by the engine to generate power is connected decreases, a case where a load rejection occurs, and a case where a load application occurs.
   Accordingly, it is possible to predict and estimate a decrease in the engine rotation speed.
(6) A power generation system according to a sixth aspect includes an engine, a generator driven by the engine, a turbocharger that supplies compressed air to the engine, an air supply pipe connecting the turbocharger and the engine, an air supply release pipe branched from the air supply pipe, an air supply release valve provided in the air supply release pipe, an exhaust bypass pipe that bypasses the turbocharger and through which exhaust gas discharged from the engine is discharged, an exhaust bypass valve provided in the exhaust bypass pipe, and the control device according to (1) or (2).
(7) A control method according to a seventh aspect is a control method for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control method including controlling an opening degree of the exhaust bypass valve based on a target air supply pressure of air or a mixed gas in which fuel and the air are mixed, the air or the mixed gas being supplied from the turbocharger to the engine, and opening the air supply release valve in a case where a decrease in a rotation speed of the engine occurs.

### Industrial Applicability

According to the control device, the power generation system, and the control method, it is possible to suppress the occurrence of surging, overshoot, or the like due to a decrease in the engine rotation speed that occurs when the grid frequency decreases or when a load is rejected.

### Reference Signs List

1, 1': power generation system
2a: air pipe
2b: air supply pipe
2c: mixer
2d: air supply pipe
2e: air supply pipe
3: air supply release pipe
3a: air supply release valve
4: exhaust bypass pipe
4a: exhaust bypass valve
5: turbocharger
5a: compressor
5b: exhaust turbine
6: engine
7: generator
8: fuel supply pipe
9a: exhaust outlet pipe
9b: exhaust pipe
9c: exhaust manifold
10: cooler
11: pressure sensor
12: temperature sensor
13: rotation speed sensor
14: output sensor
15: frequency sensor
16a, 16b: circuit breaker
20: power grid
100, 100': control device
901: CPU
902: main storage device
903: auxiliary storage device
904: input/output interface
905: communication interface

## Claims

1. A control device for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control device comprising:
means for controlling an opening degree of the exhaust bypass valve based on a target air supply pressure of air or a mixed gas in which fuel and the air are mixed, the air or the mixed gas being supplied from the turbocharger to the engine; and
means for opening the air supply release valve in a case where a decrease in a rotation speed of the engine occurs.

2. The control device according to Claim 1,
wherein the means for controlling the exhaust bypass valve calculates, based on a brake mean effective pressure calculated from the rotation speed of the engine and an output of the engine, and information defining a relationship between the brake mean effective pressure and an air supply pressure from the turbocharger to the engine, the air supply pressure corresponding to the brake mean effective pressure of the engine, and controls the exhaust bypass valve such that the calculated air supply pressure is achieved.

3. The control device according to Claim 1 or 2,
wherein the means for opening the air supply release valve opens the air supply release valve at a constant opening degree in a case where a decrease in the rotation speed of the engine occurs.

4. The control device according to Claim 1 or 2,
wherein, in a case where a decrease in the rotation speed of the engine occurs, the means for opening the air supply release valve opens the air supply release valve at an opening degree corresponding to the rotation speed of the engine and/or an output of the engine.

5. The control device according to Claim 1 or 2,
wherein the case where a decrease in the rotation speed of the engine occurs is any one of a case where a frequency of an electric power grid to which a generator driven by the engine to generate power is connected decreases, a case where a load rejection occurs, and a case where a load application occurs.

6. A power generation system comprising:
an engine;
a generator driven by the engine;
a turbocharger that supplies compressed air to the engine;
an air supply pipe connecting the turbocharger and the engine;
an air supply release pipe branched from the air supply pipe;
an air supply release valve provided in the air supply release pipe;
an exhaust bypass pipe that bypasses the turbocharger and through which exhaust gas discharged from the engine is discharged;
an exhaust bypass valve provided in the exhaust bypass pipe; and
the control device according to Claim 1 or 2.

7. A control method for controlling an air supply release valve provided in an air supply release pipe branched from an intermediate portion of an air supply pipe connecting a turbocharger and an engine, and an exhaust bypass valve provided in an exhaust bypass pipe that bypasses the turbocharger and through which exhaust gas discharged from the engine is discharged, the control method comprising:
controlling an opening degree of the exhaust bypass valve based on a target air supply pressure of air or a mixed gas in which fuel and the air are mixed, the air or the mixed gas being supplied from the turbocharger to the engine; and
opening the air supply release valve in a case where a decrease in a rotation speed of the engine occurs.
